# EUROPEAN PATENT APPLICATION

(11) **EP 0 692 319 A1**
(43) Date of publication of application: **17.01.1996**
(21) Application number: 95201920.6
(22) Date of filing: 13.07.1995
(51) Int. Cl.: B09C 1/10, B09C 1/00

(54) **Method and device for cleansing chemically polluted ground**

(30) Priority: 15.07.1994 NL 9401169
(71) Applicant: NEDERLANDSE ORGANISATIE VOOR TOEGEPAST-NATUURWETENSCHAPPELIJK ONDERZOEK TNO, NL-2628 VK Delft (NL)
(72) Inventor: Hesselink, Paulus Gerhardus Maria, NL-2716 HT Zoetermeer (NL); Doddema, Harmannus Johannes, NL-3511 EB Utrecht (NL)
(74) Representative: Jilderda, Anne Ayolt

(57) **Abstract**

Method for cleansing a portion of ground which has been polluted with chemical material, comprising the steps of (I) localising the polluted portion (2) of ground, and (II) introducing micro-organisms into the ground in or near the polluted portion (2) of ground, which micro-organisms demonstrate microbiological activity with respect to the chemical material, whereby the micro-organisms are immobilised on a carrier material (9), and device for cleansing a polluted portion (2) of ground according to this method.

## Description

The invention relates to the cleansing of a portion of ground which has been polluted with chemical material.

In situations in which it transpires that a portion of ground has been polluted with chemicals, existing infrastructure or extremely high costs often make it impossible to dig out the soil from the chemically polluted portion of ground so as to clean it elsewhere. In such an instance, it is often necessary to seal off the polluted portion of ground from its non-polluted surroundings, so as to prevent the further spread of the often mobile organic or inorganic pollutants. The sealing off of a polluted portion of ground is a known method according to the principle of Insulation, Management and Monitoring, referred to in abbreviation as the IMM approach.

The known methods for cleansing a polluted portion of ground, either by digging-out and remote cleaning of soil or by sealing off according to the IMM approach, have the disadvantage that they entail very high costs. Moreover, the IMM approach has the disadvantage that it requires eternal subsequent care.

In the invention for cleansing a portion of ground which has been polluted with chemical material, it is an object to provide a method and a device which are free of these disadvantages.

This object is achieved according to the invention with such a method, which comprises the steps of (1) localising the polluted portion of ground, and (2) introducing micro-organisms into the ground in or near the polluted portion of ground, which micro-organisms demonstrate microbiological activity with respect to the chemical material.

Using a method according to the invention, it is possible to influence the ecology of a polluted portion of ground in such a manner that, in the long term, *e.g.* a period of a few decades, the portion of ground concerned (re)assumes a multi-functional character, without the need for eternal subsequent care.

According to the invention, micro-organisms which have been introduced into the ground, form, for example, an anaerobic zone in the ground, for anaerobic conversion or anaerobic precipitation of the chemical material. An anaerobic conversion is particularly suitable when the chemical material is principally comprised of organic compounds, such as perhalogens, for example. An anaerobic precipitation is particularly suitable when the chemical material is principally comprised of metals.

According to the invention, the micro-organisms are preferably immobilised on a carrier material. In this way, the tendency for micro-organisms to attach themselves to ground particles, plastic particles, carbon particles, composting materials, *etc.,* is exploited in such a manner as to keep the micro-organisms where their presence is desired for conducting certain bio-conversions.

An embodiment of a method according to the invention is characterised in that at least one wall element is introduced substantially vertically in the vicinity of the polluted portion of ground, which wall element contains the carrier material and at least substantially seals off the polluted portion of ground from an adjacent unpolluted portion of ground, at least in a horizontal direction. As an alternative, the carrier material is not held in a separate wall element, but the wall element is itself comprised of the carrier material, which, for example, is deposited in a wall-like slot in the polluted portion of ground.

A vertically introduced wall element, containing carrier material to which micro-organisms have attached themselves, forms a barrier against (polluted) ground water emerging from the polluted portion of ground, which barrier not only holds back the ground water, but also cleanses that ground water which comes into direct contact with the barrier, as a result of the presence of the micro-organisms.

In yet another embodiment, more than one wall element is introduced in such a manner that the introduced wall elements at least substantially seal off the polluted portion of ground from an adjacent unpolluted portion of ground, in the horizontal direction.

The carrier material is preferably contained in a carrier element to be introduced into the ground.

When, according to the invention, the carrier material is contained in a carrier element which is subsequently introduced into the polluted ground, then, in many instances, it suffices when cleansing the ground to apply immobilised micro-organisms in only a few locations within, or in the vicinity of, the polluted ground area, dependent on the particular situation involved. In this manner, the biological activity of the important micro-organisms can be stimulated or controlled in a purely local fashion, which results in a remarkable reduction in costs when compared to those associated with methods according to the prior art. For example, the redox potential, oxygen content or pH can be locally influenced in such a manner as to stimulate a desired biological activity which is complimentary to that of an existing activity in the rest of the polluted portion of ground.

So as to control the microbiological activity of introduced micro-organisms, nutrients such as artificial fertiliser or other materials rich in nitrogen, phosphorous, sulphur or oxygen can be added to the micro-organisms. In this manner, selected micro-organisms are maintained, which would otherwise have a tiny chance of survival in a natural ecosystem, and a selected population is stabilised by attachment to the carrier material.

With the aid of a selected population of micro-organisms, compounds which are difficult to break down are, according to the invention, broken down at a rate which is effective under practical circumstances.

The carrier material to be applied in a carrier element is, for example, porous.

A carrier element which contains porous carrier material is particularly suitable for introduction into the ground at a location where the polluted ground water is flowing, in such a manner that the ground water is led through the micro-organisms which are attached to the carrier material. In porous carrier materials, it is possible to form biofilms in which aerobic and anaerobic zones occur. Such zones are of importance to different conversions. Anaerobic conditions are, for example, particularly suited to the precipitation of heavy metals. Precipitated heavy metals can be dug out in a simple and inexpensive manner.

Good water-permeability of a carrier element is achieved if the carrier element, in accordance with the invention, contains a course particulate carrier material.

In another embodiment according to the invention, a carrier element contains non-porous carrier material. Such a carrier element is particularly suitable for introduction as a wall element in polluted ground at a location where a water-impermeable seal between the polluted ground and the surroundings is required. A non-porous carrier material is comprised, for example, of fine particulate material.

In yet another embodiment, a carrier element contains a carrier material which has an absorbent action with respect to the pollutant.

In the vicinity of a carrier element with highly absorbent particles, the free concentration of toxic materials is reduced to a level at which biological decomposition thereof is made possible.

In a situation in which a carrier material, which has been introduced into the ground in accordance with the invention, is subjected to high pressure, then this carrier material is preferably substantially incompressible.

As porous or absorbent carrier material, one can, for example, use active carbon, whereby it deserves mention that active carbon can be prepared in either a hydrophillic or a hydrophobic form.

As porous carrier material, one can, for example, use polyurethane, which can also be prepared in a hydrophillic or hydrophobic form, or perlite, which has strong hydrophillic properties.

Compost or lava particles can, for example, be used as porous, hydrophillic, absorbent carrier material.

In situations in which the carrier material which has been introduced into the ground is subjected to high pressure, one can use, for example, bentonite, which is virtually incompressible.

The invention shall be hereinafter elucidated with reference to the accompanying drawing, wherein:
figure 1 is a plan view of a polluted portion of ground which is surrounded by an insulation wall,
figure 2 is a transverse cross-section through the insulation wall of figure 1,
figure 3 is a plan view of a polluted portion of ground in which a carrier element has been introduced and which is surrounded by an insulation wall differing from that in figure 1, and
figure 4 is a transverse cross-section through the insulation wall and the carrier element of figure 3.

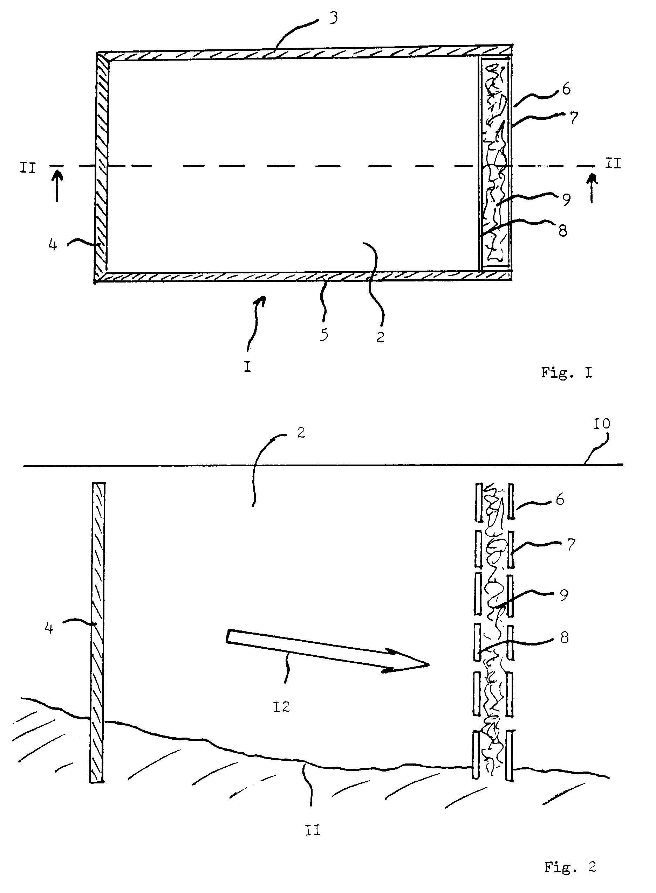

Figure 1 shows a plan view of a vertical wall 1 around a polluted portion 2 of ground. The wall 1 consists of known steel wall portions 3-5 and a wall portion 6 according to the invention, hereinafter referred to as a bioscreen 6. The bioscreen 6 consists of permeable wall portions 7,8 which are held together by, for example, transverse connections. A carrier material 9 for biologically active micro-organisms has been deposited between the wall portions 7,8 of the bioscreen 6. The wall 1 is thus positioned around the polluted portion 2 of ground that the ground water flows in the direction of the bioscreen 6.

Figure 2 shows a transverse cross-section through the line II-II in figure 1. Wall portion 4 and bioscreen 6 both extend vertically downwards from a certain level just beneath the surface 10 into a layer 11 which is impermeable to water and which is tilted in such a manner, that ground water and rain water in the polluted portion 2 of ground, drain off in the direction of arrow 12 via the bioscreen 6, where pollutants carried by the water are absorbed by the active carbon and can be converted by the micro-organisms immobilised upon the carbon.

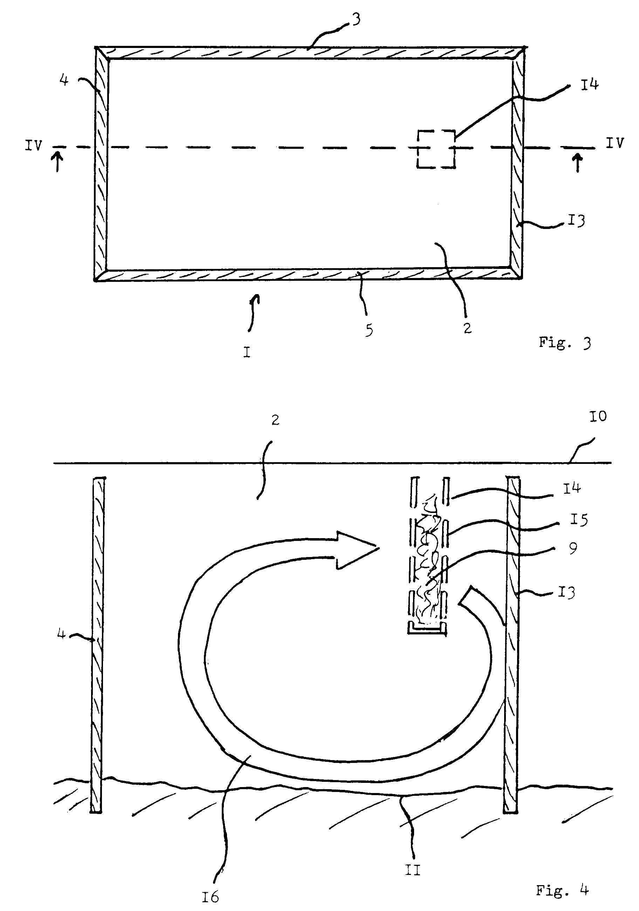

Figure 3 shows a plan view of a polluted portion 2 of ground which has been insulated in a known manner by a wall 1 consisting of steel wall portions 3-5 and 13. A carrier element 14 has been introduced into the portion 2 of ground. The state of the ground in the portion 2 is such that the water in the ground does not flow away, but circulates.

Figure 4 is a transverse cross-section through the line IV-IV in figure 3, and shows the wall portions 4 and 13, which extend vertically downwards from a certain level just beneath the surface 10 into an essentially horizontal, water-impermeable soil 11. Owing to certain geo-hydrological conditions, a circulation of water has arisen in the portion 2 of ground, as schematically depicted by arrow 16. A carrier element 14 has been introduced into the circulation stream of this water, which carrier element 14 consists of a water-permeable holder 15 into which has been deposited a porous carrier material, for example active carbon, polyurethane or perlite. If so desired, nutrients are added to the carrier material, for the benefit of micro-organisms to be attached thereto. It should be noted that application of a separate holder 14 for the carrier material 9 is not always required. In certain situations, it is sufficient to dig a hole in the polluted portion 2 of ground, and to fill this hole with carrier material 9.

The method elucidated in figures 1 and 2, and especially in figures 3 and 4, is absolutely suited to application in combination with known methods for treating polluted portions of ground, such as the IMM-approach.

The method shown in figures 3 and 4 is particularly suited to application in situations involving circulating ground water which is polluted with heavy metals. When the method is applied, the carrier material 9, together with the pollutants which have been absorbed thereby, can be dug out and carried off after a lapse of time.

## Claims

1. Method for cleansing a portion of ground which has been polluted with chemical material, comprising the steps of (1) localising the polluted portion of ground, and (2) introducing micro-organisms into the ground in or near the polluted portion of ground, which micro-organisms demonstrate microbiological activity with respect to the chemical material.

2. Method according to claim 1,
characterised in that the micro-organisms form an anaerobic zone in the ground, for anaerobic conversion of the chemical material.

3. Method according to claim 1,
characterised in that the micro-organisms form an anaerobic zone in the ground, for anaerobic precipitation of the chemical material.

4. Method according to one of the claims 1-3,
characterised in that the micro-organisms are immobilised on a carrier material.

5. Method according to claim 4,
characterised in that at least one wall element is introduced substantially vertically in the vicinity of the polluted portion of ground, which wall element contains the carrier material and at least substantially seals off the polluted portion of ground from an adjacent unpolluted portion of ground, at least in a horizontal direction.

6. Method according to claim 5,
characterised in that more than one wall element is introduced in such a manner that the introduced wall elements at least substantially seal off the polluted portion of ground from an adjacent unpolluted portion of ground, in the horizontal direction.

7. Method according to one of the claims 4-6,
characterised in that the carrier material is contained in a carrier element to be introduced into the ground.

8. Method according to one of the preceding claims,
characterised in that nutrients are added to the micro-organisms.

9. Method according to one of the claims 4-8,
characterised in that the carrier material is porous.

10. Method according to one of the claims 4-8,
characterised in that the carrier material is non-porous.

11. Method according to one of the claims 4-8,
characterised in that the carrier material is hydrophillic.

12. Method according to one of the claims 4-8,
characterised in that the carrier material is hydrophobic.

13. Method according to one of the claims 4-8, characterised in that the carrier material has an absorbent action with respect to the chemical material.

14. Method according to one of the claims 4-8, characterised in that the carrier material is substantially incompressible.

15. Method according to claim 9 or 13, characterised in that the carrier material is activated carbon.

16. Method according to claim 9, characterised in that the carrier material is polyurethane.

17. Method according to claim 9 or 10, characterised in that the carrier material is perlite.

18. Method according to one of the claims 9, 11 or 13, characterised in that the carrier material is compost.

19. Method according to one of the claims 9, 11 or 13, characterised in that the carrier material comprises lava particles.

20. Method according to claim 14, characterised in that the carrier material is bentonite.

21. Device for cleansing a portion of ground which has been polluted with a chemical material, according to a method as claimed in claim 7, comprising a carrier element for introduction into the ground, which carrier element comprises a carrier material for micro-organisms.

22. Device according to claim 21, characterised in that the carrier element comprises a wall element.

23. Device according to claim 22, characterised in that the wall element can be combined with other wall elements to form a wall to be introduced substantially vertically into the ground.
